(19) Europäisches Patentamt / European Patent Office / Office européen des brevets

(11) **EP 3 187 628 B1**

(12) **EUROPEAN PATENT SPECIFICATION**

(45) Date of publication and mention
of the grant of the patent:
**17.03.2021 Bulletin 2021/11**

(21) Application number: **15835515.6**

(22) Date of filing: **30.07.2015**

(51) Int Cl.:
*C25D 13/06* (2006.01)   *C09D 5/44* (2006.01)
*C09D 179/08* (2006.01)   *C25D 13/10* (2006.01)
*C25D 13/16* (2006.01)   *C25D 13/04* (2006.01)
*H01B 3/30* (2006.01)

(86) International application number:
**PCT/JP2015/071600**

(87) International publication number:
**WO 2016/031480 (03.03.2016 Gazette 2016/09)**

(54) **ELECTRODEPOSITION COATED ARTICLE AND METHOD FOR PRODUCING SAME**

ELEKTROTAUCHBESCHICHTETER ARTIKEL UND VERFAHREN ZUR HERSTELLUNG DAVON

ARTICLE REVÊTU PAR ÉLECTRODÉPOSITION ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.08.2014 JP 2014171210**

(43) Date of publication of application:
**05.07.2017 Bulletin 2017/27**

(73) Proprietor: **Mitsubishi Materials Corporation
Chiyoda-ku,
Tokyo 100-8117 (JP)**

(72) Inventors:
• **IIDA, Shintaro
Naka-shi
Ibaraki 311-0102 (JP)**
• **SAKURAI, Hideaki
Naka-shi
Ibaraki 311-0102 (JP)**

• **KAMIBAYASHI, Hiroyuki
Arida-shi
Wakayama 649-0304 (JP)**
• **NAGATO, Toyokazu
Arida-shi
Wakayama 649-0304 (JP)**

(74) Representative: **Gille Hrabal
Partnerschaftsgesellschaft mbB
Patentanwälte
Brucknerstraße 20
40593 Düsseldorf (DE)**

(56) References cited:
**JP-A- S5 230 846      JP-A- S5 230 846
JP-A- 2011 006 655   JP-A- 2014 173 110
US-A1- 2010 300 885   US-A1- 2012 241 191**

**Description**

Technical Field

The present invention relates to an electrodeposition coated article in which an article to be coated is coated with polyamide imide by electrodeposition coating, and a method for producing the same.

Background Art

Conventionally, dip coating in which an article to be coated is dipped in a coating material and then is pulled up, and after that, the coating material is dried, and coating is repeated until a predetermined insulating film thickness is obtained, or electrodeposition coating in which a current is allowed to pass through an electrodeposition coating material by inserting an electrode into the electrodeposition coating material, coating material particles are deposited on a rectangular conductive wire which is set to an anode, a formed insulating film is half-cured and rolled, and then, is cured, and thus, an insulating conductive wire is formed is performed as a method of forming an insulating film on a sectional rectangular (hereinafter, also simply referred to as "rectangular") conductive wire (for example, refer to Patent Document 1). On the other hand, a method is disclosed as the electrodeposition coating in which a rectangular conductive wire is allowed to pass through an electrodeposition layer filled with an electrodeposition coating material, and then, is allowed to pass through a solvent layer filled with an organic solvent or mist or steam of an organic solvent, and after that, is baked, and thus, an insulating film is formed (for example, refer to Patent Document 2). Further, a method of generating mist of an organic solvent by a ultrasonic wave or a method of spraying steam of an organic solvent from an ejection nozzle is disclosed as a method of electrodeposition coating a rectangular conductive wire with an electrodeposition coating material, and then, of spraying an organic solvent (for example, refer to Patent Documents 3 and 4).

Document JP S 52 30846 A discloses a method for producing an electrodeposition coated article similar to the one of the current invention. However, the method in said document deviates from the one of the current invention as, for example, the electrodeposition coating material contains a solvent containing polyamide and an organic solvent.

Document US 2012 / 241191 A discloses a coated copper wire wherein the insulation layer is pinhole-free. The coating insulation comprises polyamide imide and N-methyl-2-pyrrolidone. The coating is applied via an unspecified method.

Document US 2010 / 300885 A discloses an electrodeposition coated article wherein the insulation layer is pinhole-free and has a surface roughness Ra of less than 0.5. The composition comprises a specific resin comprising an amino-group-containing modified epoxy resin (A), a phenolic hydroxy-group containing resin (B) and a blocked isocyanate curing agent (C). Emulsions of this specific resin mixture in water and cationic electrodeposition coating compositions comprising said emulsions, pigment paste and water are disclosed.

Prior Art Documents

Patent Documents

[Patent Document 1] Japanese Unexamined Patent Application Publication No. H03-159014 (Right Column on Page 1 to Upper Right Column on Page 2)
[Patent Document 2] Japanese Unexamined Patent Application Publication No. H03-241609 (Lower Left Column on Page 4 to Upper Left Column on Page 5)
[Patent Document 3] Japanese Examined Patent Application Publication No. H04-065159 (Left Column on Page 2)
[Patent Document 4] Japanese Unexamined Patent Application Publication No. 2012-160304 (Paragraph

Summary of the Invention

Problems to be Solved by the Invention

However, in the conventional dip coating described in the Patent Document 1 mentioned above, it is difficult to attach the coating material to a corner portion of the rectangular conductive wire, uneven coating occurs, or the coating is required to be repeated many times in order to obtain a predetermined insulating film thickness, and in the electrodeposition coating, an electric field is concentrated on the corner portion of the rectangular conductive wire, and thus, the insulating film on the corner portion becomes thick, or rolling is required to be performed in a half-cured state. On the other hand, in the conventional method of allowing the rectangular conductive wire to pass through the organic solvent described in the Patent Document 2 mentioned above, an insulating film not having a pinhole is obtained with an equal thickness of insulating film, but even in a case of being dipped in a liquid of the organic solvent, the liquid does not penetrate into a gap between resin fine particles due to a surface tension, and thus, it is not possible to perform sufficient dissolution, or it is difficult to control the temperature or the amount of the organic solvent in the steam or the mist. Further, in the conventional methods of generating the mist of the organic solvent by the ultrasonic wave or the method of spraying the steam of the organic solvent from the ejection nozzle described in the Patent Documents 3 and 4 mentioned above, it is possible to adjust the temperature or the amount of the organic solvent, but a complicated device configuration such as a ultrasonic wave generating device, a steam spraying device using a nozzle, and other control devices is required to be controlled, there is a concern that the organic solvent is discharged into the air and affects a human body, and thus, fire protection is required to be considered.

An object of the present invention is to provide an electrodeposition coated article in which an insulating film does not have a pinhole and insulating properties are excellent. Another object of the present invention is to provide a method for producing an electrodeposition coated article in which it is possible to simply form an insulating film having a flat surface without any pinhole in a safe environment.

Means for Solving Problems

As a result of intensive studies for attaining the objects described above, the inventors have found that in a case where a base material is coated with an insulating film by electrodeposition coating, an organic solvent having high polyamide imide solubility is added to an electrodeposition coating material containing polyamide imide, and the electrodeposition coating is performed, and thus, it is possible to form an insulating film having a flat surface without any pinhole, and thus, the present invention has been completed.

The first viewpoint of the present invention is a method for producing an electrodeposition coated article, in which an insulating film is formed by forming an insulating layer on a surface of an article to be coated according to an electrodeposition method by using an electrodeposition coating material, and then by performing a baking treatment, wherein the electrodeposition coating material is configured by adding an organic solvent that is a hydrophilic solvent to a varnish that is made by dispersing water-dispersible polyamide imide into water or to a varnish that is made by dissolving water-soluble polyamide imide into water, and

a boiling point of the organic solvent is higher than 100°C, and a relationship of $D_{(S-P)} < 6$ is satisfied, $D_{(S-P)}$ being represented by an expression described below,

$$D_{(S-P)} = [(dD^S - dD^P)^2 + (dP^S - dP^P)^2 + (dH^S - dH^P)^2]^{1/2}$$

(1)

in the expression, $dD^S$ is a dispersion component of an HSP value of an organic solvent, $dD^P$ is a dispersion component of an HSP value of polyamide imide, $dP^S$ is a polarization component of an HSP value of an organic solvent, $dP^P$ is an polarization component of an HSP value of an polyamide imide, $dH^S$ is a hydrogen bonding component of an HSP value of an organic solvent, and $dH^P$ is a hydrogen bonding component of an HSP value of polyamide imide.

HSP (dD, dP, and dH) is a value intrinsic to a substance, and compatibility is high among the substances with the close values to one another. It is possible to calculate the value from a molecular structure and to estimate the value by a method of a second viewpoint of the present invention described below even in a case where the molecular structure of the substance is not known.

The second viewpoint of the present invention is an invention based on the first viewpoint, the organic solvent is N,N-dimethyl acetamide, N,N-dimethyl formamide, propylene carbonate, dimethyl sulfoxide, 4-butyrolactone, or N-methyl-2-pyrrolidone.

The third viewpoint of the present invention is an invention based on the first viewpoint or the second viewpoint, wherein the article to be coated is a copper wire.

The fourth viewpoint of the present invention is an electrodeposition coated article produced by the method of any of the three viewpoints mentioned above, wherein in an insulating film formed on a surface of an article to be coated, the number of pinholes on a film sectional surface measured by being observed with SEM is less than or equal to 50 items/10 μm square, and surface roughness Ra measured according to JISC0601 is less than or equal to 40 nm.

Effects of Invention

In the first viewpoint of the present invention, the organic solvent is added to the electrodeposition coating material which is a solvent containing polyamide imide, and thus, a tank of an organic solvent, a device of generating and spraying mist and steam, and a control device are not required, and the organic solvent is not formed into the steam or the mist, and thus, it is possible to simply produce in a safe environment by decreasing a concern that the organic solvent is discharged into the air. Next, the boiling point of the organic solvent is 100°C or higher, and thus, even in a case where a temperature in a baking step becomes 100°C or higher, and the moisture of the electrodeposition coating material is evaporated, the organic solvent remains. Therefore, it is possible to expect a swelling and dissolving effect of polyamide imide with respect to a resin due to the organic solvent for a long period of time. Further, solubility of the organic solvent with respect to polyamide imide is defined by an expression of $D_{(S-P)} < 6$ by using a Hansen solubility parameter. In a case where an organic solvent having low compatibility with respect to polyamide imide is added, it is difficult for organic solvent molecules to enter a polymer chain forming polyamide imide particles, and a state is not formed in which the polymer chain is released, and thus, film formability is not improved, and a crack or a pinhole may be generated. However, the organic solvent having high compatibility with respect to polyamide imide is selected and added by the prescribed conditions described above, and thus, the polyamide imide particles are in a swollen state, that is, the organic solvent molecules enter the polymer chain forming the polyamide imide particles, the state is formed in which the polymer chain is released, and the polyamide imide particles are easily fused together at the time of performing thermal curing, and film formability is improved. Therefore, it is possible to produce an electrodeposition coated article including a flat insulating film having excellent insulating properties without any crack or any pinhole.

In the first viewpoint of the present invention, the electrodeposition coating material is water dispersible or water soluble, and the organic solvent is the hydrophilic solvent, and thus, the electrodeposition coating material and the organic solvent become substances which are dispersed or dissolved in water. Therefore, it is possible to reliably form an insulating film on a surface to be coated.

In the second viewpoint of the present invention, N,N-dimethyl acetamide, N,N-dimethyl formamide, propylene carbonate, dimethyl sulfoxide, 4-butyrolactone, or N-methyl-2-pyrrolidone is used as the organic solvent, and thus, it is possible to form an insulating film having an even surface with few pinholes or without any pinhole, in particular, with respect to an epoxy polymer and an acrylic polymer.

In the third viewpoint of the present invention, it is possible to form an insulating copper wire in which the insulating film has few pinholes or does not have a pinhole.

In the fourth viewpoint of the present invention, it is possible to provide an electrodeposition coated article including the insulating film with few pinholes or without any pinhole in which insulating properties are excellent, and it is possible to maintain insulating performance even in a rigorous environment where irradiation of an electron beam, a cosmic ray, an ultraviolet ray, and the like is strictly performed.

When the article to be coated is a copper wire it is possible to provide an insulating copper wire in which the insulating film has few pinholes or does not have a pinhole, insulating properties are excellent, and it is possible to maintain insulating performance even in a rigorous environment where irradiation of an electron beam, a cosmic ray, an ultraviolet ray, and the like is strictly performed.

Brief Description of the Drawings

Fig. 1 is a diagram schematically illustrating an electrodeposition coating device of an embodiment of the present invention.
Fig. 2 is an SEM picture diagram in which a sectional surface of an insulating portion of an insulating copper wire of Example 1 is enlarged.
Fig. 3 is an SEM picture diagram in which a sectional surface of an insulating portion of an insulating copper wire of Comparative Example 1 is enlarged.

Embodiments to Carry Out the Invention

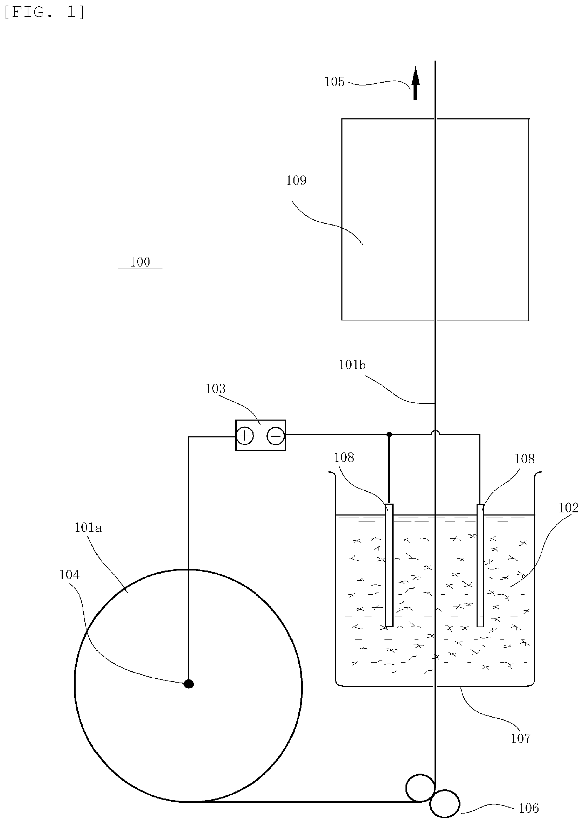

Next, an embodiment of the present invention will be described on the basis of the drawings.
As illustrated in Fig. 1, the present invention is a method in which a rectangular conductive wire 101b is coated with polyamide imide and an organic solvent by an electrodeposition coating device 100, and the coated rectangular conductive wire 101b is subjected to a heat treatment, and thus, an insulating conductive wire which is an electrodeposition coated article including an insulating film of cured polyamide imide is formed on a surface is produced.
In the characteristic configuration of the present invention, an electrodeposition coating material 102 which is prepared by adding a predetermined organic solvent selected by a selection method using a known Hansen solubility parameter described below to an electrodeposition coating material made from a solvent containing polyamide imide is used as a coating material of an electrodeposition coating device 100. Thus, the electrodeposition coating material 102 containing the organic solvent is set to a coating material of electrodeposition coating, and thus, it is possible to simply prepare the electrodeposition coating material 102 which forms a desired insulating film, and it is possible to perform the electrodeposition coating without separately providing a step of applying the organic solvent.

A producing process of an electrodeposition coated article of the present invention will be described in detail with reference to Fig. 1. Fig. 1 illustrates a mode of performing an electrodeposition step, a baking step, and the like continuously in a vertical direction, but it is possible to perform the electrodeposition coating of the present invention by any mode such as a method of performing each step continuously in a horizontal direction or a batch mode of collectively performing one step, and then, of performing the next step.

Fig. 1 is a diagram illustrating an example of a producing process of forming an insulating film on a conductive wire 101 by the electrodeposition coating device 100. An anode 104 which is connected to a positive electrode of a direct current power source 103 is disposed on a conductive wire 101a having a circular sectional surface which is wound into the shape of a cylinder. The circular conductive wire 101a is pulled up in a direction of an arrow 105 and passes through each step. First, as a first step, the circular conductive wire 101a is rolled into the shape of a rectangle through a pair of rolling rollers 106, and thus, the rectangular conductive wire 101b having a rectangular sectional surface is obtained. Next, as a second step, the rectangular conductive wire 101b passes through an electrodeposition tank 107 filled with the electrodeposition coating material 102 in which the organic solvent is added to a solvent containing polyamide imide. In the electrodeposition coating material 102 of the electrodeposition tank 107, a cathode 108 which is connected to a negative electrode of the direct current power source 103 is disposed around the rectangular conductive wire 101b passing through the electrodeposition tank 107. When the rectangular conductive wire 101b passes through the electrodeposition tank 107, a direct current voltage is applied by the direct current power source 103, and dissolved polyamide imide is subjected to electrodeposition on the surface of the rectangular conductive wire 101b. Next, as a third step, the rectangular conductive wire 101b pulled up from the electrodeposition tank 107 passes through a baking furnace 109, and polyamide imide which has been subjected to the electrodeposition is baked on the rectangular conductive wire 101b, and thus, an insulating conductive wire is formed. Furthermore, in this specification, the "insulating conductive wire" indicates a conductive wire in which an insulating film is formed on a surface. Examples of the conductive wire include a copper wire, an aluminum wire, a copper wire, a copper alloy wire, and the like.

It is preferable that the temperature of the electrodeposition coating material 102 is 5°C to 60°C, a concentration of polyamide imide is 1 to 40% by mass, a direct current voltage is 1 to 300 V, an energizing time is 0.01 to 30 seconds, and a baking temperature is 200°C to 600°C. Furthermore, in the concentration of the organic solvent, the lower limit is set to the extent of not generating a crack in the insulating film, the upper limit may be set to a value to the extent of not making film formation according to the electrodeposition difficult due to a decrease in conductivity of the electrodeposition coating material, and a range of approximately 1 to 70% by mass is preferable.

Here, the selection method of the organic solvent of the present invention will be described in detail.

First, an organic solvent having a boiling point of higher than or equal to 100°C is selected as the organic solvent. This is because the electrodeposition coating material containing water and polyamide imide is used, and thus, water is initially evaporated at the time of performing baking, that is, in a case where the organic solvent is evaporated before water, it is not possible to expect the swelling and dissolving effect of polyamide imide due to the organic solvent at the time of performing baking. In the swelling, the organic solvent enters between the polymer chains configuring polyamide imide, and polyamide imide is swollen and gelated, and thus, an effect of improving a viscosity is expected. In addition, the organic solvent enters between the polymer chains, and the polymer chains are rarely bonded to each other, and thus, an effect of dissolving polyamide imide is also expected. This is because polyamide imide is dissolved by the organic solvent, and thus, curing does not to start from an original curing temperature of polyamide imide of 80°C, and even after moisture is evaporated, it is possible to perform baking in a state where polyamide imide which is dissolved without being cured is evenly attached onto the surface of the conductive wire as a fluid.

Next, an organic solvent having excellent solubility with respect to polyamide imide is selected based on a Hansen solubility parameter.

First, polyamide imide powder and various organic solvents are mixed, and thus, a solution including 1% by mass each of polyamide imide and the organic solvent is prepared. Respective solutions are classified into a group of a transparent liquid in which the powder is gelated and a group of an opaque liquid in which the powder is precipitated. Next, a dispersion term $dD^S$, a polarization term $dP^S$, and a hydrogen bonding term $dH^S$ of a Hansen solubility parameter of each organic solvent are formed into a three-dimensional graph, a sphere having a minimum radius is prepared such that the group of the transparent liquid is on the inside and the group of the opaque liquid is on the outside, and the center of the sphere is estimated as a Hansen solubility parameter of polyamide imide. An organic solvent in which a value obtained by inputting the estimated Hansen solubility parameter of polyamide imide and the Hansen solubility parameter of the organic solvent into Expression (1) described below is $D_{(S-P)} < 6$ is selected as an organic solvent having excellent solubility with respect to polyamide imide.

$$D_{(S-P)} = [(dD^S - dD^P)^2 + (dP^S - dP^P)^2 + (dH^S - dH^P)^2]^{1/2}$$

(1)

Here, $dD^S$ is a dispersion component having an HSP value of an organic solvent, $dD^P$ is a dispersion component of an HSP value of polyamide imide, $dP^S$ is a polarization component of an HSP value of an organic solvent, $dP^P$ is an polarization component of an HSP value of an polyamide imide, $dH^S$ is a hydrogen bonding component of an HSP value of an organic solvent, and $dH^P$ is a hydrogen bonding component of an HSP value of polyamide imide.

Examples

Next, examples of the present invention will be described in detail along with comparative examples.

<Example 1>

A rectangular copper wire having a width of 2 mm and a thickness of 0.1 mm was set to an anode of electrodeposition, and an electrodeposition tank was prepared into which an electrodeposition coating material obtained by adding N,N-dimethyl formamide (DMF) of 6% by mass to polyamide imide (water dispersible polyamide imide varnish) of 5% by mass as an organic solvent was put. Next, the rectangular copper wire passed through the electrodeposition tank at a linear velocity of 15 m/min for 2 seconds in a state where a direct current voltage of 5 V was applied, and then, the rectangular copper wire which had been subjected to electrodeposition was allowed to pass through a baking furnace in an atmosphere of 300°C, and was subjected to a baking treatment, and thus, an insulating copper wire having an insulating film thickness of 0.01 mm was prepared.

<Example 2>

An insulating copper wire having an insulating film thickness of 0.01 mm was prepared by the same method as that in Example 1 except that the organic solvent was changed to dimethyl sulfoxide (DMSO) of 6% by mass.

<Example 3>

An insulating copper wire having an insulating film thickness of 0.01 mm was prepared by the same method as that in Example 1 except that the organic solvent was changed to 4-butyrolactone (4B) of 6% by mass.

<Example 4>

An insulating copper wire having an insulating film thickness of 0.01 mm was prepared by the same method as that in Example 1 except that the organic solvent was changed to N-methyl-2-pyrrolidone (NMP) of 6% by mass.

<Example 5>

An insulating copper wire having an insulating film thickness of 0.01 mm was prepared by the same method as that in Example 1 except that the organic solvent was changed to DMF of 0.5% by mass.

<Example 6>

An insulating copper wire having an insulating film thickness of 0.01 mm was prepared by the same method as that in Example 1 except that the organic solvent was changed to DMF of 50% by mass.

<Comparative Example 1>

An insulating copper wire having an insulating film thickness of 0.01 mm was prepared by the same method as that in Example 1 except that the organic solvent was not added, but mist of DMF was added to the rectangular copper wire after the rectangular copper wire passed through the electrodeposition tank.

<Comparative Example 2>

An insulating copper wire having an insulating film thickness of 0.01 mm was prepared by the same method as that in Example 1 except that the organic solvent was not added.

<Comparative Example 3>

An insulating copper wire having an insulating film thickness of 0.01 mm was prepared by the same method as that in Example 1 except that the organic solvent was changed to formamide of 6% by mass.

<Comparative Example 4>

An insulating copper wire having an insulating film thickness of 0.01 mm was prepared by the same method as that in Example 1 except that the organic solvent was changed to acetone of 6% by mass.

<Contrast between Examples and Comparative Examples>

In the insulating copper wires obtained in each of the examples and the comparative examples, the number of pinholes was evaluated by an SEM picture, surface roughness Ra was evaluated by a surface step profiler (using a stylus type surface shape measuring instrument manufactured by ULVAC, Inc.), and voltage resistance was evaluated (using an AC voltage resistance tester TOS5000 manufactured by KIKUSUI ELECTRONICS CORP.). The evaluation results are shown in Table 1.

[Table 1]

|  | Additive | | | | Evaluation Item | | | |
|---|---|---|---|---|---|---|---|---|
|  | Type | Amount (% by mass) | Boiling Point (°C) | D(S-P) | Presence or Absence of Crack | Surface Roughness Ra (nm) | Pinhole (Item/10 $\mu$m Square) | Voltage Resistance (kV) |
| Example 1 | DMF | 6 | 153 | 3.8 | Absent | 50 | 0 | 1.5 |
| Example 2 | DMSO | 6 | 189 | 2.7 | Absent | 40 | 0 | 1.5 |
| Example 3 | 4B | 6 | 204 | 4.5 | Absent | 40 | 0 | 1.5 |
| Example 4 | NMP | 6 | 202 | 2.6 | Absent | 50 | 0 | 1.5 |
| Example 5 | DMF | 0.5 | 153 | 3.8 | Absent | 50 | 0 | 1.5 |
| Example 6 | DMF | 50 | 153 | 3. 8 | Absent | 50 | 0 | 1.5 |
| Comparative Example 1 | DMF Mist Treatment | - | 153 | 3. 8 | Absent | 250 | 16 | 1.5 |
| Comparative Example 2 | Not being Added | - | - | - | Present | - | - | - |
| Comparative Example 3 | Formamide | 6 | 211 | 18.6 | Absent | 200 | 50 | 0.3 |
| Comparative Example 4 | Acetone | 6 | 57 | 5.8 | Present | - | - | - |

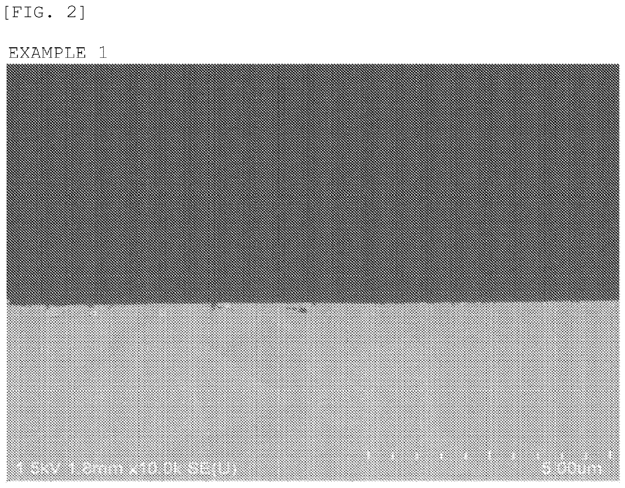

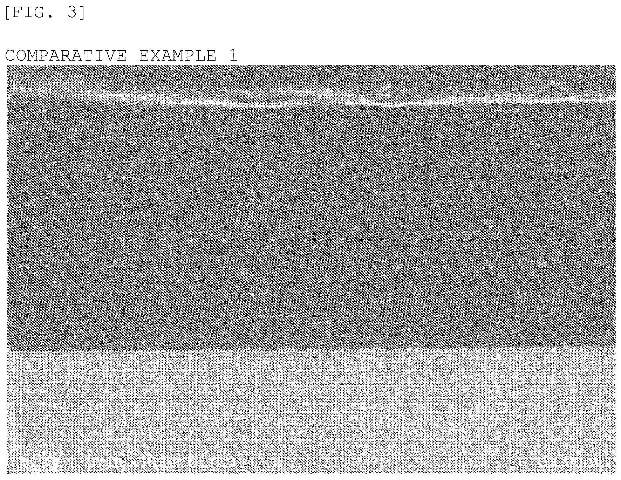

In Examples 1 to 6, the insulating copper wires having excellent insulating properties were obtained in which any crack or any pinhole was not generated, the surface roughness was 40 to 50 nm, and the voltage resistance was 1.5 kV.
In Comparative Examples 1 and 3, any crack was not generated, but the surface roughness was 200 to 250 nm, the number of pinholes was 16 to 50 items/10 $\mu$m square, and the voltage resistance was 0.3 to 1.5 kV, and thus, each evaluation item had an inferior result, compared to the examples.
In both of Comparative Examples 2 and 4, a crack was generated, and in the other evaluation items, data for comparative evaluation was not obtained.
Next, the state of the structure on the sectional surface of the insulating copper wires of Example 1 and Comparative Example 1 was observed by an SEM picture. The SEM picture was imaged by using S-4300SE manufactured by Hitachi, Ltd. The results are illustrated in Fig. 2 and Fig. 3.

As illustrated in Fig. 2 and Fig. 3, in Example 1, any pinhole was not observed, whereas in Comparative Example 1, a plurality of pinholes were observed.

From the results described above, it was confirmed that electrodeposition baking is performed by using the electrodeposition coating material simply prepared by using the organic solvent which had a boiling point of higher than or equal to 100°C and was selected by the Hansen solubility parameter, and thus, it was possible to obtain an insulating copper wire including an insulating film which had a dense and smooth surface and high voltage resistance without any pinhole in a safe producing environment.

Industrial Applicability

It is possible to use the electrodeposition coated article of the present invention in a personal computer, a power inductor for a power source of a smart phone, a transformer of an on-vehicle inverter, and the like.

Explanation of Reference Numerals

102: electrodeposition coating material

## Claims

1. A method for producing an electrodeposition coated article, in which an insulating film is formed by forming an insulating layer on a surface of an article to be coated according to an electrodeposition method by using an electrodeposition coating material, and then by performing a baking treatment,
wherein the electrodeposition coating material is configured by adding an organic solvent that is a hydrophilic solvent to a varnish that is made by dispersing water-dispersible polyamide imide into water or to a varnish that is made by dissolving water-soluble polyamide imide into water, and
a boiling point of the organic solvent is higher than 100°C, and a relationship of $D_{(S-P)} < 6$ is satisfied, $D_{(S-P)}$ being represented by an expression described below,

$$D_{(S-P)} = [(dD^S - dD^P)^2 + (dP^S - dP^P)^2 + (dH^S - dH^P)^2]^{1/2}$$

$$(1)$$

in the expression, $dD^S$ is a dispersion component of an HSP value of an organic solvent, $dD^P$ is a dispersion component of an HSP value of polyamide imide, $dP^S$ is a polarization component of an HSP value of an organic solvent, $dP^P$ is an polarization component of an HSP value of an polyamide imide, $dH^S$ is a hydrogen bonding component of an HSP value of an organic solvent, and $dH^P$ is a hydrogen bonding component of an HSP value of polyamide imide.

2. The method for producing an electrodeposition coated article according to Claim 1,
wherein the organic solvent is N,N-dimethyl acetamide, N,N-dimethyl formamide, propylene carbonate, dimethyl sulfoxide, 4-butyrolactone, or N-methyl-2-pyrrolidone.

3. The method for producing an electrodeposition coated article according to Claims 1 or 2,
wherein the article to be coated is a copper wire.

4. An electrodeposition coated article produced by the method of any of claims 1 to 3,
wherein in an insulating film formed on a surface of an article to be coated, the number of pinholes on a film sectional surface measured by being observed with SEM is less than or equal to 50 items/10 $\mu$m square, and surface roughness Ra measured according to JISC0601 is less than or equal to 40 nm.

**Patentansprüche**

1. Ein Verfahren zur Herstellung eines durch elektrolytische Abscheidung beschichteten Gegenstandes, bei dem eine Isolierschicht durch die Bildung einer isolierenden Schicht auf der Oberfläche eines zu beschichtenden Gegenstandes entsprechend einem Verfahren der elektrolytischen Abscheidung durch die Verwendung eines Beschichtungsmaterials zur elektrolytischen Abscheidung, und dann durch die Durchführung einer Brennbehandlung, gebildet wird, wobei das Beschichtungsmaterial zur elektrolytischen Abscheidung durch die Zugabe eines organischen Lösungsmittels, bei dem es sich um ein hydrophiles Lösungsmittel handelt, zu einem Lack, der durch das Dispergieren eines Wasser-dispergierbaren Polyamidimids in Wasser hergestellt wird, oder zu einem Lack, der durch das Auflösen eines wasserlöslichen Polyamidimids in Wasser hergestellt wird, eingestellt wird, und
der Siedepunkt des organischen Lösungsmittels höher als 100 °C liegt, und der Beziehung $D_{(S-P)} < 6$ Genüge getan wird,
wobei $D_{(S-P)}$ durch den unten beschriebenen Ausdruck wiedergegeben wird,

$$D_{(S-P)} = [ (dD^S - dD^P)^2 + (dP^S - dP^P)^2 + (dH^S - dH^P)^2]^{1/2} \qquad (1),$$

wobei in dem Ausdruck $dD^S$ die Dispersionskomponente des HSP-Wertes eines organischen Lösungsmittels, $dD^P$ die Dispersionskomponente des HSP-Wertes des Polyamidimids, $dP^S$ die Polarisationskomponente des HSP-Wertes eines organischen Lösungsmittels, $dP^P$ die Polarisationskomponente des HSP-Wertes des Polyamidimids, $dH^S$ die Wasserstoffbindungskomponente des HSP-Wertes eines organischen Lösungsmittels, und $dH^P$ die Wasserstoffbindungskomponente des HSP-Wertes von Polyamidimid ist.

2. Das Verfahren zur Herstellung eines durch elektrolytische Abscheidung beschichteten Gegenstandes gemäß Anspruch 1,
wobei es sich bei dem organischen Lösungsmittel um N,N-Dimethylacetamid, N,N-Dimethylformamid, Propylencarbonat, Dimethylsulfoxid, 4-Butyrolacton, oder N-Methyl-2-pyrrolidon handelt.

3. Das Verfahren zur Herstellung eines durch elektrolytische Abscheidung beschichteten Gegenstandes gemäß Anspruch 1 oder 2,
wobei es sich bei dem zu beschichtenden Gegenstand um einen Kupferdraht handelt.

4. Ein durch das Verfahren gemäß einem der Ansprüche 1 bis 3 hergestellter durch elektrolytische Abscheidung beschichteter Gegenstand,
wobei bei der auf der Oberfläche eines zu beschichtenden Gegenstandes gebildeten Isolierschicht die Anzahl von Nadellöchern auf einem Schichtschnittoberfläche, die durch die Betrachtung mittels SEM gemessen wird, geringer als oder gleich 50 Elementen/10 Quadrat-$\mu$m ist, und die Oberflächenrauigkeit Ra, gemessen gemäß JISC0601, weniger als oder gleich 40 nm ist.

**Revendications**

1. Procédé de fabrication d'un objet revêtu par électrodéposition, dans lequel un film d'isolation est formé en formant une couche d'isolation sur une surface d'un objet à revêtir selon un procédé d'électrodéposition en utilisant un matériau de revêtement par électrodéposition, et ensuite en effectuant un traitement par cuisson,
dans lequel le matériau de revêtement par électrodéposition est configuré en ajoutant un solvant organique, qui est un solvant hydrophile, à un vernis, qui est fabriqué en dispersant du polyamide-imide dispersable dans l'eau, ou à un vernis, qui est fabriqué par dissolution dans l'eau du polyamide-imide soluble dans l'eau, et
le point d'ébullition du solvant organique est supérieur à 100°C et un rapport de $D_{(S-P)} < 6$ est satisfait, $D_{(S-P)}$ étant représenté par une expression décrite ci-dessous,

$$D_{(S-P)} = [ (dD^S - dD^P)^2 + (dP^S - dP^P)^2 + (dH^S - dH^P)^2]^{1/2} \qquad (1)$$

dans l'expression, $dD^S$ est un composant de dispersion d'une valeur HSP d'un solvant organique, $dD^P$ est un composant de dispersion d'une valeur HSP de polyamide-imide, $dP^S$ est un composant de polarisation d'une valeur HSP d'un solvant organique, $dP^P$ est un composant de polarisation d'une valeur HSP d'un polyamide-imide, $dH^S$

est un composant de liaison d'hydrogène d'une valeur HSP d'un solvant organique, et $dH^P$ est un composant de liaison d'hydrogène d'une valeur HSP de polyamide-imide.

2. Procédé de fabrication d'un objet revêtu par électrodéposition selon la revendication 1, dans lequel le solvant organique est le N,N-diméthyle acétamide, le N, N-diméthyle formamide, le carbonate de propylène, le diméthylsulfoxyde, le 4-butyrolactone, ou le N-méthyle-2-pyrrolidone.

3. Procédé de fabrication d'un objet revêtu par électrodéposition selon la revendication 1 ou la revendication 2, dans lequel l'objet à revêtir est un fil en cuivre.

4. Objet revêtu par électrodéposition fabriqué par le procédé selon l'une quelconque des revendications 1 à 3, dans lequel dans un film d'isolation formé sur une surface d'un objet à revêtir, le nombre d'ouvertures minuscules sur une surface de section transversale du film mesuré par l'observation avec SEM est inférieur ou égale à 50 points/ 10 $\mu$m carrés, et la rugosité de la surface Ra mesurée selon JISC0601 est inférieure ou égale à 40 nm.

[FIG. 1]

[FIG. 2]

EXAMPLE 1

[FIG. 3]

COMPARATIVE EXAMPLE 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S5230846 A
- US 2012241191 A
- US 2010300885 A
- JP H03159014 B
- JP H03241609 B
- JP H04065159 B
- JP 2012160304 A